# EUROPEAN PATENT APPLICATION

(11) **EP 2 778 565 A1**
(43) Date of publication of application: **17.09.2014**
(21) Application number: 12847010.1
(22) Date of filing: 13.07.2012
(51) Int. Cl.: F24J 2/52, H01L 31/042

(54) **STACKING SYSTEM FOR PHOTOVOLTAIC POWER GENERATION MODULE**

(30) Priority: 07.11.2011 KR 20110115386
(71) Applicant: Kepco Engineering & Construction Company, Inc., Gyeonggi-Do 449-713 (KR)
(72) Inventor: KIM, Yong Taek, Seongnam-si, Gyeonggi-do 463-850 (KR)
(74) Representative: Merryweather, Colin Henry
(86) International application number: PCT/KR2012/005554
(87) International publication number: WO 2013/069875

(57) **Abstract**

Provided is a stacking system for photovoltaic power generation modules. The stacking system includes: first and second support spaced apart from each other; and a plurality of rest plates whose both ends are respectively coupled to the first and second support for placing the photovoltaic power generation module on the rest plates. The photovoltaic power generation modules are stacked by placing the photovoltaic power generation module on the rest plates.

## Description

### TECHNICAL FIELD

The present invention relates to a stacking system for photovoltaic power generation modules, and more particularly, to a stacking system for efficiently stacking photovoltaic power generation modules in terms of vertical space usage and power generation per unit area.

### BACKGROUND ART

Various alternative eco-friendly energy resources have recently been developed, and photovoltaic power generation is one of such alternative eco-friendly energy resources that attracts much attention. Photovoltaic power generation does not incur cost of fuel affecting the unit cost of power generation. However, photovoltaic power generation incurs high costs for securing a necessary site, installation, maintenance, etc, and thus the economic value thereof is not high.

In the related art, solar panels configured to receive sunlight and generate electricity from the sunlight are arranged within a certain range of area, and photovoltaic power generation is performed using the solar panels. Specifically, solar panels are arranged in a single layer over a large area. For example, large-scale photovoltaic power generation is performed in regions such as desserts and salterns, and small-scale photovoltaic power generation is performed on the roofs of buildings. Korean Patent Application Laid-open Publication No. 2011-0087134 discloses a solar panel. In the related art, however, solar panels are arranged in a single layer. Therefore, power generation efficiency per unit area is limited, and considerable cost is incurred for securing a site necessary for obtaining a desired power generation rate.

### DETAILED DESCRIPTION OF THE INVENTION

### TECHNICAL PROBLEM

The present invention provides a stacking system for efficiently stacking photovoltaic power generation modules in terms of vertical space usage and power generation per unit area.

### ADVANTAGEOUS EFFECTS

According to the stacking system of the present invention, photovoltaic power generation modules may be efficiently stacked in terms of vertical space usage and power generation per unit area.

### DESCRIPTION OF THE DRAWINGS

FIG. 1 is a perspective view illustrating a stacking system for photovoltaic power generation modules according to an embodiment of the present invention.
FIG. 2 is a perspective view illustrating a photovoltaic power generation module.
FIG. 3 is a view illustrating a solar panel unit and a driving unit.
FIG. 4 is a view illustrating a support plate.
FIG. 5 is a view illustrating a base plate and a rail unit.
FIG. 6 is a view illustrating the stacking system used for stacking photovoltaic power generation modules according to an embodiment of the present invention.

### BEST MODE

According to an aspect of the present invention, there is provided a stacking system for stacking photovoltaic power generation modules, the stacking system including: first and second support spaced apart from each other; and a plurality of rest plates whose both ends are respectively coupled to the first and second support for placing the photovoltaic power generation module on the rest plates, wherein the photovoltaic power generation modules are stacked by placing the photovoltaic power generation module on the rest plates.

Preferably, the stacking system may include a barrier coupled to the rest plates and vertically positioned between the first and second support to divide a space between the first and second support.

Preferably, the stacking system may include a reinforcement member inserted through the barrier and coupled to the first support at an end thereof and the second support at the other end thereof, wherein a shock-absorbing member may be coupled to the reinforcement member to absorb forces applied to the first and second support.

Preferably, each of the photovoltaic power generation modules may include: a solar panel unit to which a solar panel is attached; a base plate on which the solar panel unit is placed; a driving unit configured to rotate the solar panel; a rail unit on which the base plate is supported in a forwardly and backwardly slidable manner; and an accommodation space unit in which a storage battery is disposed to store electricity generated by the solar panel or a DC/AC inverter is disposed.

Preferably, the solar panel unit may include: the solar panel configured to generate electricity from sunlight; a support plate on which the solar panel is placed; and a transparent protection plate covering an upper side of the solar panel, wherein a cooling tube may be disposed in the support plate to cool the solar panel.

Preferably, the driving unit may include: a motor providing power to rotate the solar panel; a rotation shaft configured to be rotated by the motor and disposed in a direction perpendicular to the base plate; a support member coupled to an end of the rotation shaft for supporting the solar panel at an oblique angle; a gear coupled to the other end of the rotation shaft for being rotated together with the rotation shaft; and a slidable bar engaged with the gear for being moved in a direction perpendicular to a forwardly or backwardly moving direction of the base plate.

Preferably, the rail unit may be coupled to an end of the accommodation space unit and protruding from the end of the accommodation space unit, and the accommodation space unit may be placed on the rest plates.

### MODE OF THE INVENTION

Preferred embodiments of the present invention will now be described in detail with reference to the accompanying drawings.

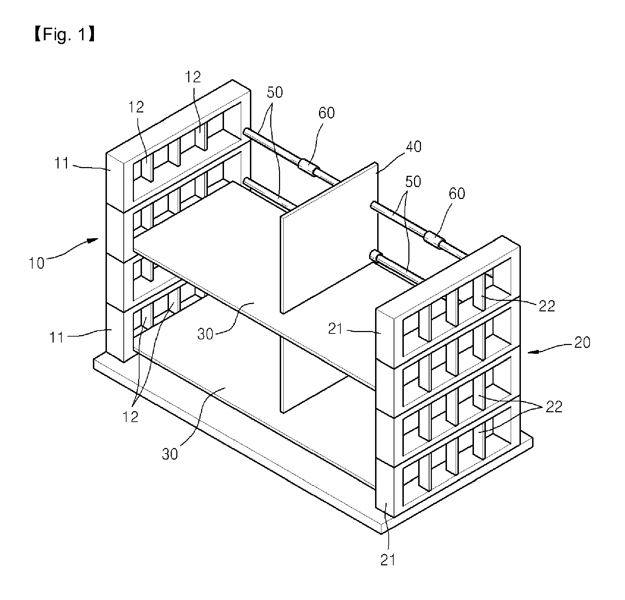

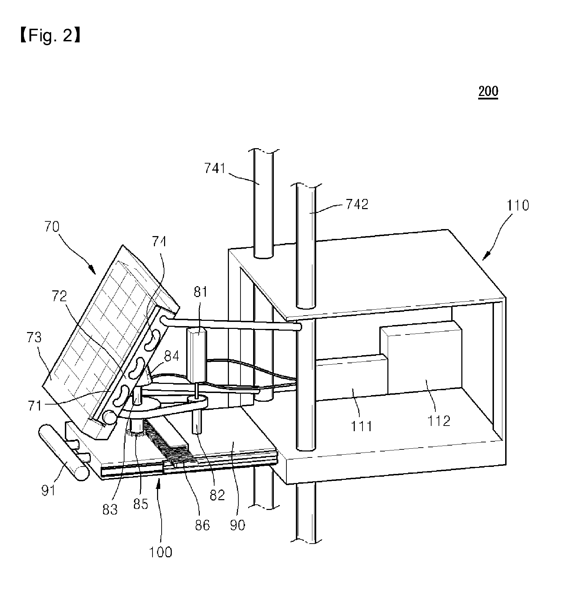

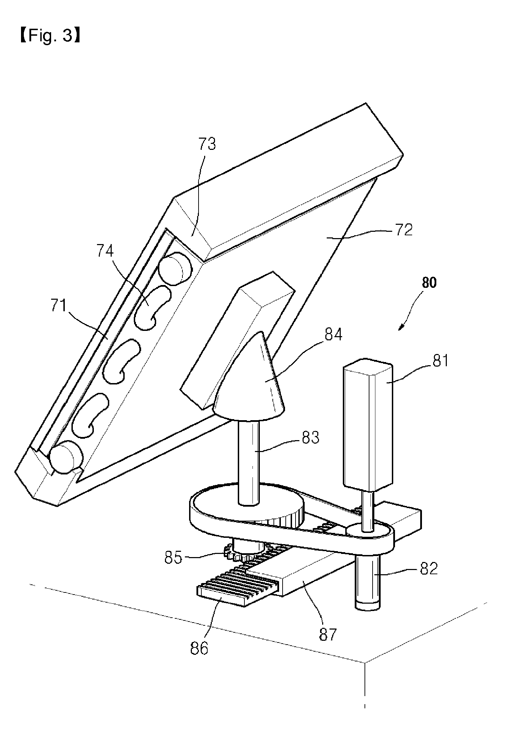

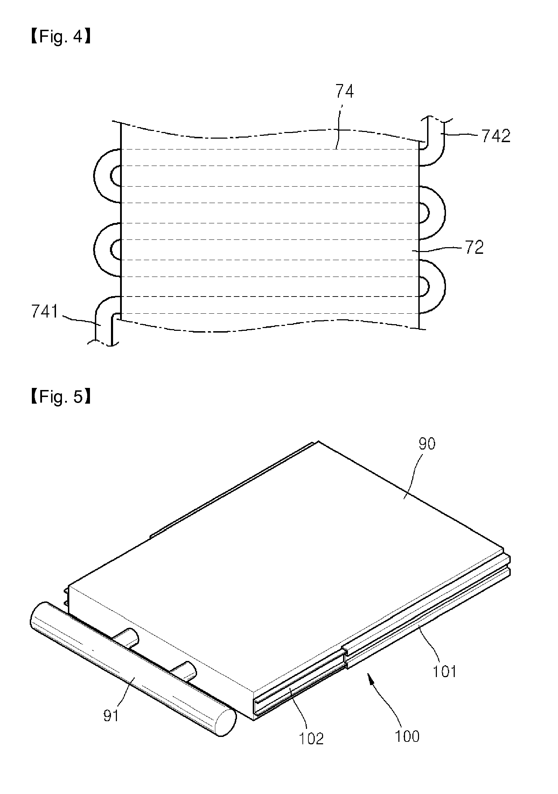

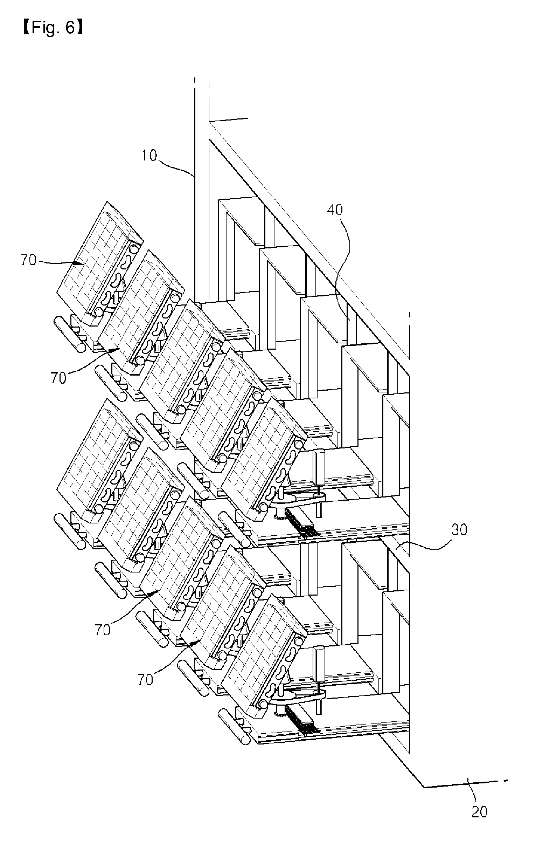

FIG. 1 is a perspective view illustrating a stacking system for photovoltaic power generation modules according to an embodiment of the present invention. FIG. 2 is a perspective view illustrating a photovoltaic power generation module. FIG. 3 is a view illustrating a solar panel unit and a driving unit. FIG. 4 is a view illustrating a support plate. FIG. 5 is a view illustrating a base plate and a rail unit. FIG. 6 is a view illustrating the stacking system used for stacking photovoltaic power generation modules according to an embodiment of the present invention.

Referring to FIG. 1, according to the embodiment of the present invention, the stacking system for photovoltaic power generation modules includes a first support 10, a second support 20, and rest plate 30.

The first and second supports 10 and 20 are spaced apart from each other and form a basic structure for stacking photovoltaic power generation modules 200 thereon. The first support 10 is formed by stacking a plurality of first unit supports 11. Like the first support 10, the second support 20 is formed by stacking a plurality of second unit supports 21. The heights of the first and second supports 10 and 20 may be easily adjusted by stacking the first and second unit supports 11 and 21 to predetermined heights.

As shown in FIG. 1, the first and second unit supports 11 and 21 include a plurality of first and second reinforcement frames 12 and 22 that are vertically disposed. When the first and second unit supports 11 and 21 are stacked, the first and second reinforcement frames 12 and 22 structurally stabilize first and second unit supports 11 and 21.

Photovoltaic power generation module 200 is placed on the rest plate 30. Both ends of the rest plate 30 are coupled to the first and second support 10 and 20. That is, an end of the rest plate 30 is coupled to the first support 10, and the other end of the rest plate 30 is coupled to the second support 20. The rest plate 30 horizontally divide s a vertical space between the first and second support 10 and 20, and photovoltaic power generation modules 200 are stacked on the rest plate 30.

In the current embodiment, the stacking system includes a barrier 40, reinforcement member 50, and shock-absorbing member 60.

The barrier 40 is coupled to the rest plate 30 and vertically positioned between the first and second support 10 and 20. The barrier 40 divides the space between the first and second support 10 and 20. That is, the rest plate 30 horizontally divides the space between the first and second support 10 and 20, and the barrier 40 vertically divides the space between the first and second support 10 and 20.

Referring to FIG. 1, four compartments are formed by the first and second supports 10 and 20, the rest plate 30, and the barrier 40, and photovoltaic power generation modules 200 are disposed in the compartments, respectively. The barrier 40 supports the rest plate 30 for the structural stability of the stacking system of the present invention.

One end of the reinforcement member 50 is coupled to the first support 10, and the other end of the reinforcement member 50 is coupled to the second support 20. The reinforcement member 50 is inserted through the barrier 40. In the current embodiment, the reinforcement member 50 is pipe type. The reinforcement member 50 connects the first and second support 10 and 20 to maintain the structural stability of the stacking system of the present invention against a force or wind pressure applied to the stacking system.

The shock-absorbing member 60 is coupled to the reinforcement member 50 to absorb a force applied to the first and second support 10 and 20. The shock-absorbing member 60 may have threaded inner surfaces, and the reinforcement member 50 may be inserted into the shock-absorbing member 60 from both sides of the shock-absorbing member 60. Parts such as springs may be disposed in the shock-absorbing member 60 for absorbing shocks.

In the current embodiment shown in FIG. 1, the lower end lengths of the first and second supports 10 and 20 (the front-to-back lengths of the first and second supports 10 and 20 in FIG. 1) are equal to the upper end lengths of the first and second supports 10 and 20. However, the present invention is not limited thereto. For example, the upper end lengths of the first and second supports 10 and 20 may be shorter than the lower end lengths of the first and second supports 10 and 20 so that the front sides of the first and second supports 10 and 20 are sloped when viewed from the lateral side.

Hereinafter, a photovoltaic power generation module 200 that can be placed on the stacking system of the present invention will be described in detail with reference to FIGS. 2 to 4.

Referring to FIG. 2, the photovoltaic power generation module 200 includes a solar panel unit 70, a base plate 90, a driving unit 80, a rail unit 100, and an accommodation space unit 110.

The solar panel unit 70 includes a solar panel 71, a support plate 72, and a protection plate 73.

The solar panel 71 is used for photovoltaic power generation and has a structure well known in the related art. Thus, a detailed description of the solar panel 71 will be omitted.

The support plate 72 is provided to place the solar panel 71 thereon, and a cooling tube 74 is disposed in the support plate 72 to cool the solar panel 71. Referring to FIG. 4, an inlet tube 741 is connected to the cooling tube 74 to introduce a cooling fluid into the cooling tube 74, and an outlet tube 742 is connected to the cooling tube 74 to discharge the cooling fluid from the support plate 72 after the cooling fluid flows through the cooling tube 74.

The inlet tube 741 and the outlet tube 742 extend in vertical directions. When such photovoltaic power generation modules 200 are vertically stacked, the inlet tube 741 and the outlet tube 742 may be connected to cooling tubes 74 of the photovoltaic power generation modules 200 for being commonly used therebetween.

As shown in FIG. 1, if photovoltaic power generation modules 200 are stacked in two or more layers, inlet tubes 741 of the layers may be connected to each other, and outlet tubes 742 of the layers may be connected to each other, so as to form a single overall flow passage for effective operation of a cooling system.

The solar panel 71 may be cooled by an air or water cooling method. Temperature or voltage variations of the solar panel 71 have a significant influence on the rate of photovoltaic power generation. Therefore, the support plate 72 on which the solar panel 71 is placed is configured to prevent a decrease in power generation efficiency caused by overheating.

The protection plate 73 covers the topside of the solar panel 71 and is formed of a transparent material. The protection plate 73 transmits sunlight and protects the solar panel 71 from impacts. An ultraviolet-proof film may be attached to the protection plate 73 for improving power generation efficiency.

The solar panel 71 is placed on the base plate 90. The solar panel 71 is coupled to an end of a rotation shaft 83 of the driving unit 80 at an oblique angle.

The driving unit 80 is used to rotate the solar panel 71. The driving unit 80 has a function of tracing the sun. The driving unit 80 includes a motor 81, the rotation shaft 83, a support member 84, a gear 85, and a slidable bar 86.

The motor 81 provides power to rotate the solar panel 71. The rotation shaft 83 is configured to be rotated by power transmitted from the motor 81. The rotation shaft 83 is vertically disposed on the base plate 90. In the current embodiment, the rotation shaft 83 is connected to a motor shaft 82 of the motor 81 through a chain and may be rotated in forward and backward directions.

The support member 84 is coupled to an end of the rotation shaft 83. The support member 84 has a sloped surface for supporting the solar panel 71 at an oblique angle.

The gear 85 is coupled to the other end of the rotation shaft 83 for being rotated together with the rotation shaft 83. The slidable bar 86 is engaged with the gear 85 for being moved in directions perpendicular to forward and backward moving directions of the base plate 90. When the rotation shaft 83 is rotated in a forward or backward direction, the slidable bar 86 is linearly moved. Referring to FIG. 3, the slidable bar 86 is guided in a guide bar 87.

The slidable bar 86 extends horizontally to neighboring photovoltaic power generation modules 200. For example, referring to FIG. 6, five photovoltaic power generation modules 200 are horizontally arranged, and the slidable bar 86 extends so that the slidable bar 86 may interact with gears 85 of the five photovoltaic power generation modules 200. In FIG. 6, the inlet tube 741 and the outlet tube 742 are not shown for conciseness.

Referring to FIG. 6, the rightmost photovoltaic power generation modules 200 include motors 81. If the motors 81 of the rightmost photovoltaic power generation modules 200 are operated to rotate rotation shafts 83, gears 85 coupled to the rotation shafts 83 are rotated, and thus slidable bars 86 engaged with the gears 85 are linearly moved to rotate the other photovoltaic power generation modules 200 together with the rightmost photovoltaic power generation modules 200 in the same direction.

The rail unit 100 is provided to move the base plate 90 forward or backward. The base plate 90 is slidably coupled to the rail unit 100. The rail unit 100 is coupled to the accommodation space unit 110 in such a manner that the rail unit 100 protrudes from an end of the accommodation space unit 110.

Referring to FIG. 5, the rail unit 100 includes first rails 101 and second rails 102.

The first rails 101 are spaced apart from each other and provided as a pair, and the second rails 102 are coupled to inner sides of the first rails 101. The base plate 90 is coupled between the pair of first rails 101. In the current embodiment, the rail unit 100 is constituted by the first rails 101 and the second rails 102. However, the base plate 90 may further include third rails for increasing the forward or backward moving range of the base plate 90.

As the second rails 102 protrude from ends of the first rails 101 while siding on the first rails 101, the base plate 90 moves forward. The first rails 101 are coupled to the accommodation space unit 110. A handle 91 is coupled to an end of the base plate 90 so that the base plate 90 may be moved forward or backward using the handle 91.

A storage battery 112 may be disposed in the accommodation space unit 110 to store electricity produced by the solar panel 71, or a DC/AC inverter 111 may be disposed in the accommodation space unit 110. In addition, wires and other devices for operating the photovoltaic power generation module 200 may be disposed in the accommodation space unit 110. The accommodation space unit 110 is placed on one of the rest plate 30. Since the storage battery 112 or the DC/AC inverter 111, wires, and other devices are disposed in the accommodation space unit 110 placed on the rest plate 30, the motor 81 may only be used for rotating the solar panel unit 70, and thus power consumption may be reduced.

Electricity generated by photovoltaic power generation modules 200 is supplied to power-consumption areas and is also used for operating the photovoltaic power generation modules 200. According to the present invention, the stacking system may improve power supply efficiency by minimizing power necessary to operate the photovoltaic power generation modules 200.

As described above, according to the present invention, photovoltaic power generation modules 200 may be vertically stacked in the stacking system, and thus photovoltaic power generation efficiency per unit area may be markedly improved. As compared to single-stage photovoltaic power generation systems of the related art, costs necessary for securing land may be markedly reduced.

In addition, according to the present invention, the stacking system may be freely installed on flatland or the roof or wall of a building. For example, photovoltaic power generation modules may be vertically arranged on the rooftop of a building using the stacking system of the present invention for high-power electricity generation, so as to provide an independent power generation system to the building. Therefore, costs or efforts for installing photovoltaic power generation systems in in-expensive remote regions such as deserts or salterns remote from cities and transmitting power from the photovoltaic power generation systems installed in remote regions to cities may be reduced.

In addition, according to the present invention, fewer structural members may be used to install photovoltaic power generation systems, and thus costs necessary for installing the photovoltaic power generation systems may be reduced. In the case of single-stage photovoltaic power generation systems of the related art, supporting structures are necessary for the respective single-stage photovoltaic power generation systems. However, according to the present invention, costs for supporting structures may be reduced owing to the vertically stacking structure.

In addition, owing to the reinforcement member 50 and the shock-absorbing member 60 coupled to the first and second support 10 and 20, the structure of the stacking system may be stably maintained although a force is applied to the stacking system.

In addition, photovoltaic power generation is possible while tracing the sun by using the driving unit 80, and interference between vertically stacked photovoltaic power generation modules 200 can be minimized using the rail unit 100. Therefore, power generation efficiency may be improved.

In addition, since the support plate 72 on which the solar panel 71 is placed has a cooling function, a decrease in power generation efficiency caused by overheating may be prevented. Furthermore, since the protection plate 73 coupled to the solar panel 71 protects the solar panel 71 from external environments, the lifespan of the solar panel 71 may be increased.

Furthermore, in the photovoltaic power generation module 200 of the present invention, the storage battery 112, the DC/AC inverter 111, wires, and other devices are disposed in the accommodation space unit 110 placed on the rest plate 30. Therefore, the weight of the solar panel unit 70 may be reduced, and thus power necessary to drive the solar panel unit 70 may be reduced. Accordingly, electricity generated by photovoltaic power generation may be supplied to other regions more efficiently.

While the present invention has been particularly shown and described with reference to exemplary embodiments thereof, the present invention is not limited to the embodiments, and various changes in form and details may be made therein without departing from the spirit and scope of the present invention.

**<Reference Signs List>**

| | |
|---|---|
| 10 first support | 11 first unit support |
| 12 first reinforcement fame | 20 second support |
| 21 second unit support | 22 second reinforcement frame |
| 30 rest plate | 40 barrier |
| 50 reinforcement member | 60 shock-absorbing member |
| 70 solar panel unit | 71 solar panel |
| 72 support plate | 73 protection plate |
| 74 cooling tube | 741 inlet tube |
| 742 outlet tube | 80 driving unit |
| 81 motor | 82 motor shaft |
| 83 rotation shaft | 84 support member |
| 85 gear | 86 slidable bar |
| 87 .guide bar | 90 base plate |
| 91 handle | 100 rail unit |
| 101 first rails | 102 second rails |
| 110 accommodation space unit | 111 inverter |
| 112 storage battery | 200 photovoltaic power generation module |

## Claims

1. A stacking system for stacking photovoltaic power generation modules, the stacking system comprising:
first and second support spaced apart from each other; and
a plurality of rest plates whose both ends are respectively coupled to the first and second support for placing the photovoltaic power generation module on the rest plates,
wherein the photovoltaic power generation modules are stacked by placing the photovoltaic power generation module on the rest plates.

2. The stacking system of claim 1, comprising a barrier coupled to the rest plates and vertically positioned between the first and second support to divide a space between the first and second support.

3. The stacking system of claim 2, comprising a reinforcement member inserted through the barrier and coupled to the first support at an end thereof and the second support at the other end thereof,
wherein a shock-absorbing member is coupled to the reinforcement member to absorb forces applied to the first and second support.

4. The stacking system of claim 1, wherein each of the photovoltaic power generation modules comprises:
a solar panel unit to which a solar panel is attached;
a base plate on which the solar panel unit is placed;
a driving unit configured to rotate the solar panel;
a rail unit on which the base plate is supported in a forwardly and backwardly slidable manner; and
an accommodation space unit in which a storage battery is disposed to store electricity generated by the solar panel or a DC/AC inverter is disposed.

5. The stacking system of claim 4, wherein the solar panel unit comprises:
the solar panel configured to generate electricity from sunlight;
a support plate on which the solar panel is placed; and
a transparent protection plate covering an upper side of the solar panel,
wherein a cooling tube is disposed in the support plate to cool the solar panel.

6. The stacking system of claim 4, wherein the driving unit comprises:
a motor providing power to rotate the solar panel;
a rotation shaft configured to be rotated by the motor and disposed in a direction perpendicular to the base plate;
a support member coupled to an end of the rotation shaft for supporting the solar panel at an oblique angle;
a gear coupled to the other end of the rotation shaft for being rotated together with the rotation shaft; and
a slidable bar engaged with the gear for being moved in a direction perpendicular to a forwardly or backwardly moving direction of the base plate.

7. The stacking system of claim 4, wherein the rail unit is coupled to an end of the accommodation space unit and protruding from the end of the accommodation space unit, and the accommodation space unit is placed on the rest plates.
